# EUROPÄISCHE PATENTANMELDUNG

(11) **EP 1 180 704 A2**
(43) Veröffentlichungstag der Anmeldung: **20.02.2002**
(21) Anmeldenummer: 01118146.8
(22) Anmeldetag: 26.07.2001
(51) Int. Cl.: G02B 6/42, G02B 6/38, H01R 13/66

(54) **Stecker sowie System zur elektrischen Anbindung von Baugruppenträgern im Bereich der Vermittlungstechnik**

(30) Priorität: 09.08.2000 DE 10038898
(71) Anmelder: SIEMENS AKTIENGESELLSCHAFT, 80333 München (DE)
(72) Erfinder: Patzelt, Klaus, 81369 München (DE)

(57) **Zusammenfassung**

Die vorliegende Erfindung bezieht sich auf einen Stecker (1) sowie ein System zur elektrischen Anbindung von Baugruppenträgern (6) im Bereich der Vermittlungstechnik.
Dabei ist an den Stecker (1) wenigstens ein optisches Übertragungskabel (2) anschließbar. Im Gehäuse des Steckers selbst ist ein elektrooptischer Wandler (3) aufgenommen.
Zudem befindet sich im Kontackt zur Leiterplatte (7) ein elektrooptischer Wandler (3) mit Steckkontakten (15), die entweder auf die Leiterplatte (7) aufgesteckt oder aufgelötet sind. An der kundenseitigen Stirnseite (19) befinden sich ebenso Kontakte (12,12') an die die optischen Signalkabel angeschlossen sind.
Dabei dient wenigstens ein Steckkontakt (17) an der Stirnseite (18) des Steckers der Spannungsversorgung von aktiven Bauteilen im Stecker. Insbesondere wird der elektrooptische Wandler (3) durch den Steckkontakt (17) mit Spannung versorgt.

## Beschreibung

Die vorliegende Erfindung bezieht sich auf einen Stecker sowie ein System zur elektrischen Anbindung von Baugruppenträgern im Bereich der Vermittlungstechnik. Die Erfindung bezieht sich im Allgemeinen auf elektrische Kontaktierungseinrichtungen für elektrische oder optische Anbindungen.

Im Stand der Technik ist es momentan üblich, auf der Rückwand von Baugruppenträgern des Koppelfeldes einer Vermittlungsstelle sowohl optische als auch elektrische Kontaktmöglichkeiten vorzusehen. Der Nachteil dabei ist der, daß die eine Kontaktmöglichkeit (optisch bzw. elektrisch) überflüssig wird, falls der Nutzer sich für die jeweils andere Kontaktmöglichkeit entscheidet. Der Platz muß somit für zwei disjunkte Lösungen aufgeteilt werden.

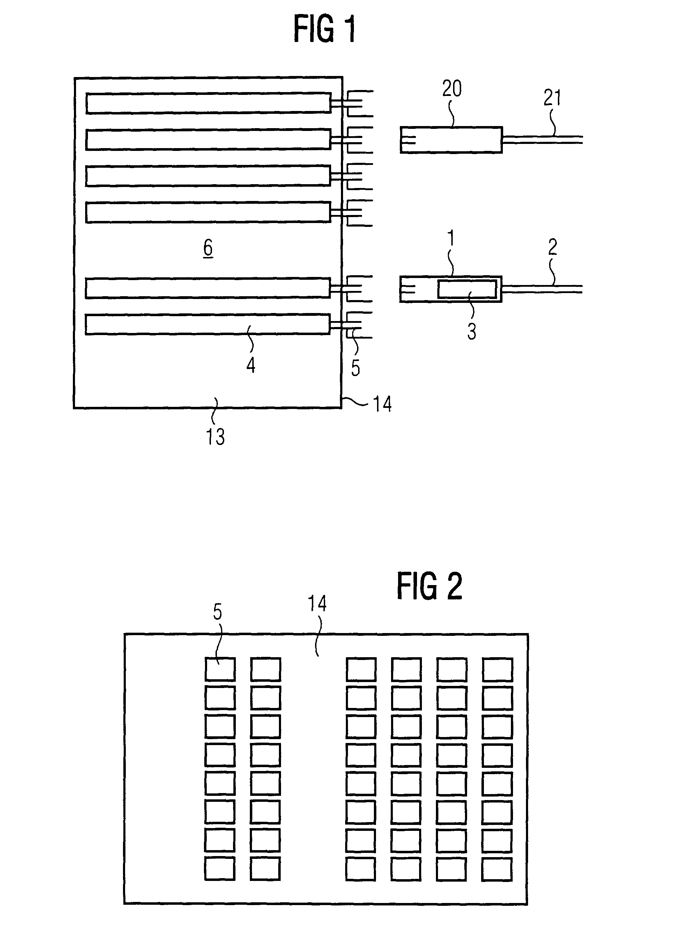

Gemäß dem Stand der Technik werden neben den elektrischen Kontaktiereinrichtungen 5 in Figur 1 auch optische Kontaktiereinrichtungen vorgesehen. Elektrische Signale werden über einen elektrischen Stecker an den Baugruppenträger übertragen und umgekehrt. Die trotz allem Platz in Anspruch nehmende optische Kontaktiereinrichtung findet im Falle der elektrischen Übertragung keine Verwendung.

Optische Signale werden mittels Lichtwellenleiter zur optischen Kontaktiereinrichtung übertragen und danach im Koppelfeld in entsprechende elektrische Signale gewandelt.
In diesem Falle findet die gleichermaßen Platz in Anspruch nehmende elektrische Kontaktiereinrichtung 5 in Figur 1 keine Verwendung.

Ein weiteres Problem im Stand der Technik ist, daß die Integration der Baugruppen fortschreitet, aber leider keine entsprechende Verkleinerung der Baugruppenträger erfolgen kann, da die Kontaktiereinrichtungen noch zu viel Platz benötigen. Auch eine höhere Integrationsdichte ist durch die "niederbitratigen" elektrischen und optischen Schnittstellen begrenzt.

Angesichts des oben genannten Standes der Technik ist es Aufgabe der vorliegenden Erfindung eine Technik bereitzustellen, die eine Verringerung des Platzbedarfs der Kontaktiereinrichtungen der Baugruppenträger ermöglicht.

Diese Aufgabe wird gemäß der Erfindung einerseits durch einen Stecker andererseits durch ein System zur elektrischen Anbindung von Baugruppenträgern gemäß den Merkmalen der unabhängigen Ansprüche gelöst.

Gemäß der Erfindung befindet sich im Gehäuse des Steckers, an den wenigstens ein optisches Übertragungskabel anschließbar ist, ein elektrooptischer Wandler.

Vorteilhafterweise werden dadurch nur noch elektrische Baugruppen benötigt. Dennoch ist eine optische Übertragung möglich. Wahlweise kann daher eine optische oder elektrische Verbindung erfolgen.

Die elektrischen Kontaktierungen des elektrooptischen Wandlers sind mittels einer Leiterplatte mit Steckkontakten an der Stirnseite des Steckers verbunden.

Auf der Leiterplatte sind aktive und/oder passive Bauteile angeordnet.

Die Bauteile können für eine Datenaufteilung, eine Datenauswahl und/oder zur Fehlerüberwachung dienen.

Wenigstens ein Teil der Steckkontakte an der Stirnseite des Steckers ist zur Spannungsversorgung von aktiven Bauteilen ausgelegt.

Erfindungsgemäß wird weiterhin ein System zur wahlweisen elektrischen oder optischen Anbindung wenigstens eines Baugruppenträgers einer Vermittlungsanlage beansprucht. Die Anbindung erfolgt über einen oben genannten und beschriebenen Stecker. Der Baugruppenträger weist dabei einheitliche elektrische Kontaktierungseinrichtungen für die elektrische oder optische Anbindung auf.

Die Pinbelegung der elektrischen Kontaktierungseinrichtungen ist für die elektrische und optische Anbindung geeignet. An jeder elektrischen Kontaktierungseinrichtung der Baugruppenträger kann so wahlweise eine optische oder elektrische Anbindung erfolgen.

Weitere Vorteile, Merkmale und Eigenschaften der vorliegenden Erfindung werden nun anhand von Ausführungsbeispielen bezugnehmend auf die begleitenden Zeichnungen näher erläutert.
Figur 1 zeigt schematisch das Koppelfeld einer digitalen Vermittlungsstelle mit den entsprechenden elektrischen Kontaktiereinrichtungen des Baugruppenträgers. Zusätzlich ist ein elektrischer und ein optischer Stecker/Tranceiver dargestellt.
Figur 2 zeigt die Rückseite des Gehäuses der digitalen Vermittlungsstelle mit den elektrischen Kontaktiereinrichtungen des Baugruppenträgers.
Figur 3 zeigt im Querschnitt der Seitenansicht, der Aufsicht sowie der Stirnseite einen elektrischen Stecker/Tranceiver wie er als Kopplungsglied zwischen Kundenseite und Koppelfeld benötigt wird.
Figur 4 zeigt im Querschnitt der Seitenansicht, der Aufsicht sowie der Stirnseite einen optischen Stecker/Tranceiver wie er als Kopplungsglied zwischen Kundenseite und Koppelfeld benötigt wird.
Figur 5 zeigt ein Anordnungsbeispiel von 4 optischen Steckern/Tranceivern auf einer Länge von 50mm sowie von 16 elektrischen Stecker/Tranceiver auf einer Länge von 300mm.

Figur 1 zeigt schematisch einen Baugruppenträger 6 einer digitalen Vermittlungsstelle. In dem Gehäuse des Baugruppenträgers 6 befinden sich die Baugruppen 4, auf welchen die digitale Verschaltung stattfindet. Die Baugruppen 4 besitzen jeweils elektrische Kontaktiereinrichtungen, welche über den Baugruppenträger 6 an weiteren Kontaktiereinrichtungen 5 zur Verfügung stehen. Die elektrischen Kontaktiereinrichtungen 5 sind die Schnittstellen, an denen die digitalen Daten entweder elektrisch oder elektrooptisch gewandelt über einen elektrischen (20) oder optischen Stecker (1) in das Koppelfeld 6 aufgenommen oder von diesem abgegeben werden.

Vorteilhafterweise wird nun in der vorliegenden Erfindung der elekrooptische Wandler 3 nach Außen verlegt und zwar so, daß dieser in einen optischen Stecker 1 integriert werden kann. Elektrooptische Wandler mit derart kleinen Abmessungen sind auf dem Markt erhältlich wie zum Beispiel das optische Modul NetLight™ 1430G5 bzw. 1430H5 Typ von der Firma Lucent oder beispielsweise V23818-N15-L17 bzw. V23818-N305-V15 der Firma Infineon.

Die Übertragung der digitalen Daten erfolgt so entweder elektrisch und zwar mit einem elektrischen Stecker 20 über eine nun einheitliche elektrische Kontaktiereinrichtung 5 auf der Rückseite 14 des Gehäuses des Baugruppenträgers 6, oder sie erfolgt optisch über einen optischen Stecker 1.

An den optischen Stecker 1 sind rückseitig z.B. zwei optische Kabel 2 zur bidirektionalen Übertragung angeschlossen. Stirnseitig besitzt er eine Geometrie, die zu der elektrischen Kontaktiereinrichtung 5 der Baugruppenträger 6 kompatibel ist.

Der elektrische Stecker 20 ist z.B. an zwei elektrische Signalleiter 21 angeschlossen. Die Stirnseite ist mit der des optischen Steckers 1 kompatibel.

In Figur 2 ist das Raster der elektrischen Kontaktiereinrichtungen 5 auf der Rückseite 14 des Koppelfeldes der digitalen Vermittlungsstelle dargestellt.
Die elektrischen Kontaktiereinrichtungen sind vereinheitlicht und rückseitig mit den Baugruppen 4 verbunden.

Die Querschnittsfläche der elektrischen Kontaktiereinrichtungen 5 und damit das Rastermaß ist durch die Querschnittsabmessung der elektrischen 20 und optischen Stecker 1 festgelegt und ergibt sich durch die Abmessungen der jeweiligen Komponenten in den Steckern.

Das den Querschnitt begrenzende Bauteil ist zur Zeit der elektrooptische Wandler 3. Ein Modell von einem der oben genannten Typen hat beispielsweise derartige Maße, daß der Querschnitt eines optischen Steckers eine Querschnittsbreite von etwa 20mm und eine Querschnittshöhe von etwa 12,5mm aufweist. Damit können vier optische Stecker auf einer Länge von fünf Zentimetern in einer Reihe angeordnet werden.

Dadurch daß die elektrische Kontaktiereinrichtung für beide Stecker einheitlich ist, ist der Querschnitt des elektrischen Steckers den Abmessungen des optischen Steckers angeglichen.

Hervorzuheben ist das Handling der Anschlüsse. Die Stecker liegen viel zu dicht beeinander, als daß man beispielsweise die elektrischen Kabel 21 austauschen könnte. Nur durch das Herausnehmen zum Beispiel mit einer Spezialzange ist der Zugang zum eigentlichen Kundenanschluß möglich. Ein vertikaler Mindestabstand zwischen den einzelnen Anschlüssen ist damit nicht mehr notwendig.

Der Vorteil einer derart modifizierten Anordnung liegt im kompakteren Aufbau der Kundenschnittstelle und dem möglichen flexiblen Einsatz optischer und elektrischer Schnittstellen. Auch bei einem Ausfall einer einzelnen optischen Komponente muß nicht eine gesamte Baugruppe mit dem darauf befindlichen elektrooptischen Wandler ausgetauscht werden, sondern nur noch die entsprechende optische Komponente, das heißt der optische Stecker 1.

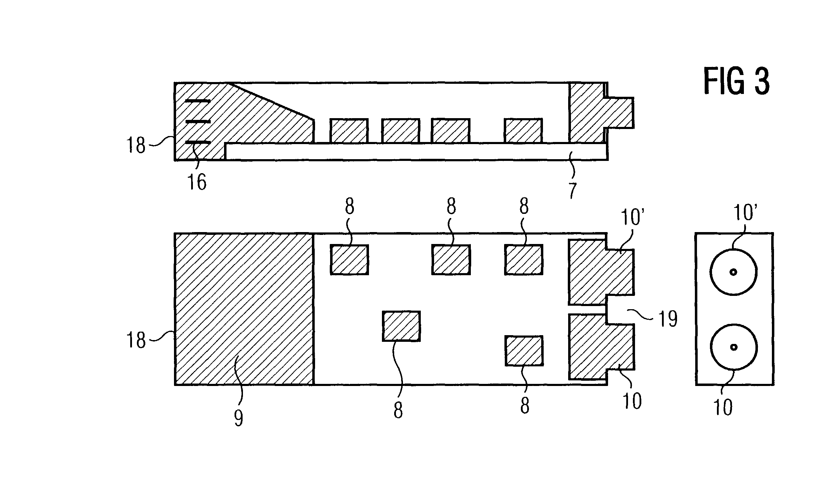

Figur 3 zeigt im Querschnitt der Seitenansicht, der Aufsicht sowie kundenanschlußseitig einen elektrischen Stecker/Tranceiver wie er als Kopplungsglied zwischen Kundenseite und Koppelfeld benötigt wird.

Den Boden des elektrischen Steckers bildet eine elektrische Leiterplatte, die einen kundenseitigen elektrischen Anschlußstecker 10,10' mit einem elektrischen Stecker 9 der sich auf der Seite der elektrischen Kontaktiereinrichtung befindet, verbindet.

Auf der Leiterplatte sind elektrische aktive und/oder passive Bauelemente 8, wie zum Beispiel Dioden, Widerstände, Ics, etc., angeordnet. Unter den aktiven Bauelementen befindet sich z.B. ein aktiver Daten-Splitter in Upstreamrichtung und z.B. ein Pindiodenswitch in Downstream-Richtung. Des weiteren sind zur Berücksichtigung von Blitzschutz und Maßnahmen der Versorgungsspannungsredundanz Kondensatoren und SchottkyDioden vorgesehen.

Der elektrische Anschlußstecker auf der kundenseitigen Stirnseite 19 ist ein Doppel-Zweipolstecker 10,10' an den die elektrischen Signalleitungen 21 angeschlossen werden. Verwendet werden können beispielsweise SMB, SMC oder andere kleine Winkelstecker.

Es ist zu bemerken, daß der Anschluß des Kundenkabels statt eines elektrischen Anschlußsteckers allerdings auch über kurze Kabel erfolgen kann.

Die Anordnung der Steckkontakte 16 des bauträgerseitigen Steckers 9 ist zu der der elektrischen Kontaktiereinrichtung kompatibel.

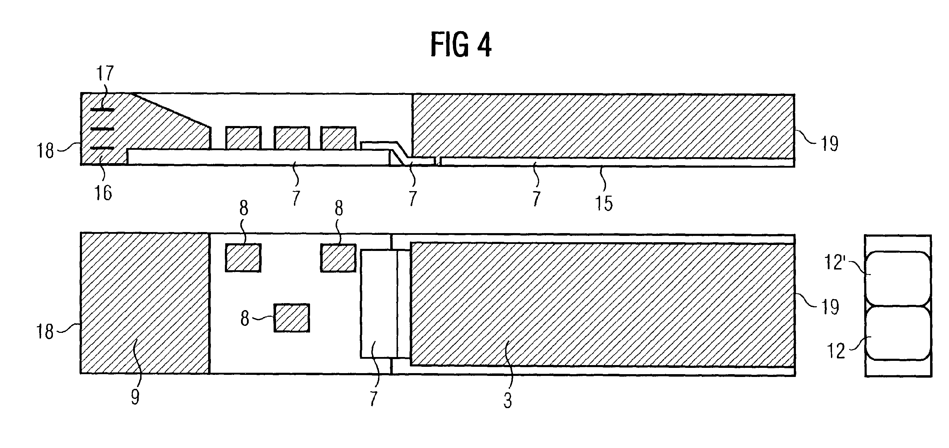

Figur 4 zeigt im Querschnitt der Seitenansicht, der Aufsicht sowie der kundenseitigen Stirnseite 19 einen optischen Stecker/Tranceiver wie er als Kopplungsglied zwischen Kundenseite und Koppelfeld benötigt wird.

Wie beim elektrischen Stecker bildet den Boden des optischen Steckers auch wieder eine Leiterplatte 7 auf der ebenso elektrische aktive und/oder passive Bauelemente 8 wie Dioden, Widerstände, Ics etc. angeordnet sind. Die Blitzschutzmaßnahmen in Form von Kondensatoren und Schottkydioden müssen allerdings nicht übernommen werden.

Zudem befindet sich im Kontakt zur Leiterplatte 7 ein elektrooptischer Wandler 3 mit Steckkontakten 15, die entweder auf die Leiterplatte 7 aufgesteckt oder aufgelötet sind. An der kundenseitigen Stirnseite 19 befinden sich ebenso Kontakte 12,12' an die die optischen Signalkabel angeschlossen sind.

Die Leiterplatte 7 sorgt für die Umsetzung der Kontakte des elektrooptischen Wandlers 3 zu den Steckkontakten 16. Es ist sinnvoll, daß der elektrooptische Wandler 3 längsseitig aufgenommen wird, damit der Steckerquerschnitt möglichst klein ist. Die Steckkontakte 15 des elektrooptischen Wandlers 3 stehen damit senkrecht auf der Achse des Steckers mit den Steckkontakten 16. Um eine Verbindung zwischen den jeweiligen Steckkontakten zu schaffen dient die Leiterplatte 7, die womöglich auch flexibel ausgelegt sein kann.

Der bauträgerseitige Stecker 9 des optischen Steckers ist baugleich dem bauträgerseitigen Stecker 9 des elektrischen Steckers, da beide Stecker zu den elektrischen Kontaktiereinrichtungen kompatibel sein müssen.
Dabei dient wenigstens ein Steckkontakt 17 an der Stirnseite 18 des Steckers der Spannungsversorgung von aktiven Bauteilen im Stecker. Insbesondere wird der elektrooptische Wandler 3 durch den Steckkontakt 17 mit Spannung versorgt.

Wie oben erwähnt, begrenzt die Dimension des elektrooptischen Wandlers die Querschnittsabmessungen des optischen und damit auch des elektrischen Steckers. Die jeweilige Länge der beiden Stecker kann unterschiedlich sein.

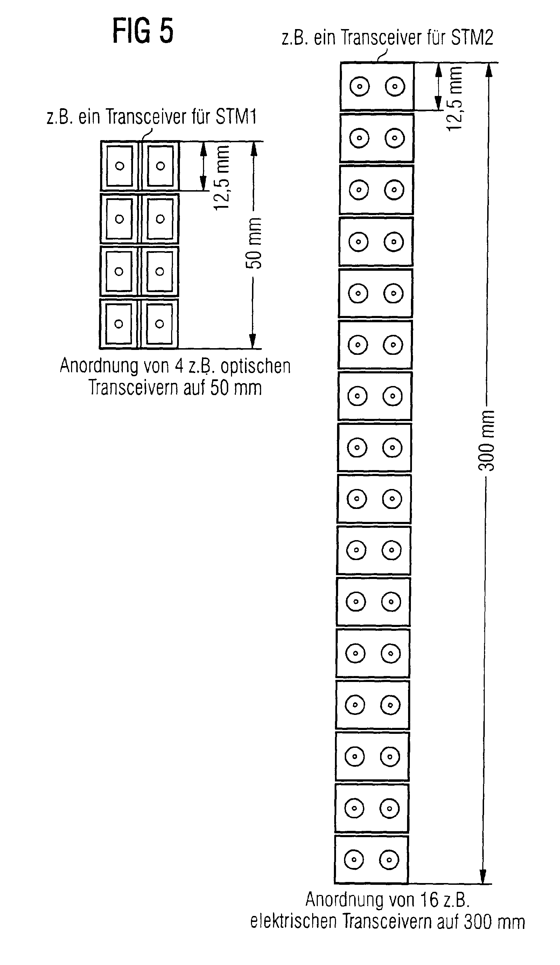

Figur 5 zeigt wie beispielsweise 4 optische Stecker/Tranceiver auf einer Länge von 50mm sowie 16 elektrische Stecker/Tranceiver auf einer Länge von 300mm angeordnet sein können.

### Bezugszeichenliste

- 1: Optischer Stecker
- 2: Optischer Signalleiter
- 3: Elektrooptischer Wandler
- 4: Baugruppe
- 5: Elektrische Kontaktiereinrichtung
- 6: Baugruppenträger
- 7: Leiterplatte
- 8: elektrische aktive und/oder passive Bauelemente
- 9: Bauträgerseitiger elektrischer Stecker
- 10,10': Elektrische Anschlußstecker
- 12,12': Optische Anschlußvorrichtung
- 13: Gehäuse des Koppelfeldes
- 14: Rückseite des Gehäusese des Koppelfeldes
- 15: Elektrische Kontakte des elektrooptischen Wandlers
- 16: Steckkontakte des bauträgerseitigen Steckers
- 17: Steckkontakt zur Spannungsversorgung von aktiven Bauteilen
- 18: Bauträgerseitige Stirnseite des elektrischen oder optischen Steckers
- 19: Kundenanschlußseitige Stirnseite des elektrischen oder optischen Steckers
- 20: Elektrischer Stecker
- 21: Elektrischer Signalleiter

## Patentansprüche

1. Stecker (1) zur elektrischen Anbindung von Baugruppenträgern (6) im Bereich der Vermittlungstechnik, wobei an den Stecker (1) wenigstens ein optisches Übertragungskabel (2) anschließbar ist,
**dadurch gekennzeichnet,**
**daß** im Gehäuse des Steckers selbst ein elektrooptischer Wandler (3) aufgenommen ist.

2. Stecker (1) nach Anspruch 1,
**dadurch gekennzeichnet,**
**daß** die elektrischen Kontaktierungen (15) des elektrooptischen Wandlers (3) mittels einer Leiterplatte (7) mit Steckkontakten (16,17) an der Stirnseite des Steckers (18) verbunden sind.

3. Stecker (1) nach Anspruch 2,
**dadurch gekennzeichnet,**
**daß** auf der Leiterplatte (7) aktive und/oder passive Bauteile (8) angeordnet sind.

4. Stecker (1) nach Anspruch 3,
**dadurch gekennzeichnet,**
**daß** die Bauteile (8) für eine Datenaufteilung, eine Datenauswahl und/oder zur Fehlerüberwachung dienen können.

5. Stecker (1) nach einem der vorhergehenden Ansprüche,
**dadurch gekennzeichnet,**
**daß** wenigstens ein Teil der Steckkontakte (17) an der Stirnseite des Steckers (18) zur Spannungsversorgung von aktiven Bauteilen im Stecker ausgelegt ist.

6. System zur wahlweisen elektrischen oder optischen Anbindung wenigstens eines Baugruppenträgers (6) einer Vermittlungsanlage mittels eines Steckers nach einem der vorhergehenden Ansprüche (1), wobei der Baugruppenträger (6) einheitliche elektrische Kontaktierungseinrichtungen (5) für die elektrische oder optische Anbindung aufweist.

7. System nach Anspruch 6,
**dadurch gekennzeichnet,**
**daß** die Pinbelegung der elektrischen Kontaktierungseinrichtungen (5) kompatibel zur elektrischen und optischen Anbindung ist, so daß an jeder elektrischen Kontaktierungseinrichtung (5) der Baugruppenträger (6) wahlweise eine optische oder elektrische Anbindung erfolgen kann.
